# EUROPÄISCHE PATENTSCHRIFT

(11) **EP 2 586 630 B1**
(45) Veröffentlichungstag und Bekanntmachung des Hinweises auf die Patenterteilung: **16.12.2015**
(21) Anmeldenummer: 12188673.3
(22) Anmeldetag: 16.10.2012
(51) Int. Cl.: B60C 23/00

(54) **Drehdurchführung**
Rotary feed-through
Passage tournant

(30) Priorität: 24.10.2011 DE 202011051737 U
(43) Veröffentlichungstag der Anmeldung: 01.05.2013
(73) Patentinhaber: PTG Reifendruckregelsysteme GmbH, 41468 Neuss (DE)
(72) Erfinder: Tigges, Martin, 41468 Neuss (DE)
(74) Vertreter: Haverkamp, Jens

(56) Entgegenhaltungen:
- WO-A1-00/15451
- GB-A- 191 126 685
- US-A- 1 800 780

## Beschreibung

Die Erfindung betrifft eine Drehdurchführung als Teil einer Reifendruckregelanlage eines Fahrzeuges, umfassend eine drehmomentschlüssig an eine ein Rad tragende Welle des Fahrzeuges anschließbare Rotorbaugruppe und eine gegenüber der Rotationsbewegung der Rotorbaugruppe ortsfest angeordnete Statorbaugruppe, wobei sich zwischen der Rotorbaugruppe und der Statorbaugruppe ein abgedichteter oder abdichtbarer ringförmiger Übertragungskanal befindet, durch den für die Zwecke einer Reifendruckregelung eine Wegsamkeit zum Übertragen eines Gases von der Statorbaugruppe an die Rotorbaugruppe und/oder umgekehrt bereitgestellt ist.

Reifendruckregelanlagen werden bei Kraftfahrzeugen, etwa bei Nutzfahrzeugen, wie Lastkraftwagen, Schleppern oder Erdbewegungsmaschinen eingesetzt, um den in dem Reifen befindlichen Reifendruck an unterschiedliche Betriebssituationen des Kraftfahrzeuges anpassen zu können. Eine Reifendruckanpassung erfolgt vornehmlich in Abhängigkeit von dem zu befahrenden Untergrund und/oder der Beladung. Durch den Reifendruck kann die Aufstandsfläche des Reifens verändert werden. Ein Reifen weist bei einem geringeren Reifendruck eine größere Aufstandsfläche auf als mit höherem Reifendruck. Aus diesem Grunde wird man bei weichem Untergrund lieber mit einem geringeren Reifendruck und mit höherer Aufstandsfläche fahren als auf einer befestigten Fahrbahn. Der Reifendruck kann auch in Abhängigkeit von dem jeweiligen Beladungszustand geändert werden.

Derartige Reifendruckregelanlagen verfügen über eine Drehdurchführung, um zum Erhöhen des Reifeninnendruckes Druckluft von einer fahrzeugseitigen Druckluftquelle an das drehbar gelagerte Rad zu übertragen. Eine solche Drehdurchführung umfasst eine fahrzeugseitig angeordnete Statorbaugruppe und eine durch einen Bewegungsspalt von dieser getrennte, radseitig angeordnete Rotorbaugruppe. Beide Baugruppen sind je nach Ausgestaltung der Drehdurchführung entweder axial oder radial zueinander angeordnet. Zur Druckluftübertragung verfügen Stator und Rotor über ringförmige einander bezüglich des Bewegungsspaltes gegenüberliegende und zueinander weisend offene Nuten oder Kammern, die durch aktivierbare Dichtungen, wie in EP 1 095 799 B1 beschrieben, für den Zeitpunkt der Druckluftübertragung zur Ausbildung einer Druckluftübertragungskammer abgedichtet werden. Radseitig ist an den Rotor der Drehdurchführung eine zur Felge des Rades führende Luftleitung vorgesehen. Diese durchgreift die Felge in einer Öffnung und mündet in das Reifeninnere. In die radseitige Luftleitung ist typischerweise ein ansteuerbares Ventil eingeschaltet, welches für den Vorgang der Reifendruckregelung geöffnet und nach Abschluss des Vorganges geschlossen ist. Die Druckluft selbst wird mit einem fahrzeugseitig angeordneten Kompressor bereitgestellt. Als Kompressor dient typischerweise der bei Nutzfahrzeugen ohnehin zum Betreiben der Bremsanlage vorhandene Kompressor.

Bei einer Nachrüstung eines Fahrzeuges, etwa eines Kraftfahrzeuges mit einer solchen Reifendruckregelanlage werden die Drehdurchführungen mit ihrer Rotorbaugruppe an der drehenden, das zumindest eine Rad, dessen Reifendruck geregelt werden soll, tragende Welle angeschweißt. Für die Zwecke der Reifendruckregelanlage ist diese Art des Anschlusses der Drehdurchführung an die Welle unproblematisch. In einigen Fällen wird eine solche nachträgliche Befestigung an der Welle nicht toleriert, da der Schweißprozess und die damit einhergehende Wärmeeinwirkung Gefügeänderungen im Bereich der Schweißstelle innerhalb der Welle, typischerweise als Antriebswelle vorgesehen, zur Folge hat. Zwar sind diesbezüglich noch keinerlei funktionale Beeinträchtigungen einer solchen Antriebswelle bekannt geworden, die auf das Anschweißen einer Drehdurchführung als Teil einer Reifendruckregelanlage zurückgeführt werden konnten, dennoch besteht der Wunsch nach einer Befestigung der Drehdurchführung an der Fahrzeugwelle, die einen solchen Nachteil nicht aufweist.

Bei den vorbekannten Drehdurchführungen ist die radseitige Zuleitung als Teil der Rotorbaugruppe an ein Rotorteil angeschlossen, und zwar an ein Anschlusswinkelstück. Dieses ist mit seinem einen Ende in axialer Richtung mit dem Rotorteil verschraubt. Der zum Rad führende Abgang befindet sich in einer radialen Anordnung. Bei einer unsachgemäßen Handhabung von auf der Welle zu befestigenden Rädern, gerade wenn diese über einen Konus auf der Welle festgesetzt werden, kann es zu Beschädigungen des Winkelstückes oder gar zu einem Abreißen desselben führen. Zudem besteht gerade bei solchen Kraftfahrzeugen, die auf einer Welle mehrere Räder tragen, der Wunsch, wenn möglich, den notwendigen Einbauraum in axialer Richtung bezüglich der Fahrzeugwelle möglichst klein zu halten.

Eine aus WO 00/15 451 A1 bekannte Fixierung einer Drehdurchführung durch einen Spannring kann die Forderung nach geringem Einbauraum jedoch nicht erfüllen.

Ausgehend von dem diskutierten Stand der Technik liegt der Erfindung daher die Aufgabe zugrunde, eine Drehdurchführung der eingangs genannten Art dergestalt weiterzubilden, dass diese mit ihrer Rotorbaugruppe an die sich drehende Welle eines Fahrzeuges angeschlossen werden kann, ohne dass Änderungen oder anderweitige Beeinträchtigungen hinsichtlich der Qualität und Funktionalität der Welle in Kauf genommen werden müssen. Zudem wäre es wünschenswert, wenn die Drehdurchführung hinsichtlich ihres radseitigen Leitungsanschlusses weniger beschädigungsanfällig wäre und in axialer Richtung mit einem geringeren Bauraum auskommen würde.

Gelöst wird diese Aufgabe erfindungsgemäß durch eine Drehdurchführung als Teil einer Reifendruckregelanlage mit den Merkmalen des Anspruchs 1.

Bei dieser Drehdurchführung ist die Rotorbaugruppe mehrteilig, also zumindest zweiteilig ausgeführt. Dabei ist vorgesehen, dass ein erstes Rotorteil ein geschlossener Ringkörper ist. Dieses ist auf die Fahrzeugwelle aufschiebbar. Typischerweise wird man versuchen, das Spiel dieses Ringkörpers gegenüber der Fahrzeugwelle möglichst gering zu halten. Neben diesem ersten Rotorteil der Rotorbaugruppe verfügt die Rotorbaugruppe über ein zweites Rotorteil. Dieses zweite Rotorteil ist nach Art eines Spannringes ausgeführt und dient zum drehmomentschlüssigen Anschlie-ßen dieses Rotorteils an die Fahrzeugwelle. Damit wird dieses Rotorteil an der Fahrzeugwelle festgeklemmt. Das zweite Rotorteil ist zudem drehmomentschlüssig mit dem ersten Rotorteil verbunden, beispielsweise durch mehrere, mit ihrem Schaft parallel zur Drehachse angeordnete Bolzen oder Schrauben. Insofern dient das zweite Rotorteil als Anschlussstück zum drehmomentschlüssigen Anschließen des ersten Rotorteils an die Welle. Die beiden Rotorteile befinden sich in einer axialen Anordnung zueinander, mithin in einer Nebeneinanderanordnung.

Bei diesem Konzept ist es nicht erforderlich, die Rotorbaugruppe mit der Welle zu verschweißen, um diese drehmomentschlüssig an die Fahrzeugwelle anzuschließen. Überdies kann das als Spannring ausgebildete zweite Rotorteil, welches sich somit um die Fahrzeugwelle herum erstreckt und diese dadurch einfasst, genutzt werden, um hierauf einen in radialer Richtung abgehenden Anschluss für eine zu einem von der Welle getragenen Rad führenden Leitung anzuschließen. Da das zweite Rotorteil vollständig oder zumindest im Wesentlichen vollständig die Welle umfasst, ist dieser radiale Leitungsabgang gegenüber Beschädigungen bei einer unsachgemäßen Radmontage wirksam verhindert.

Gemäß einem bevorzugten Ausführungsbeispiel ist vorgesehen, dass das erste Rotorteil einen internen Kanal aufweist, dessen erstes Ende in den zwischen Rotorbaugruppe und Statorbaugruppe befindlichen Übertragungskanal mündet. Aufgrund der axialen Anordnung von erstem Rotorteil und zweitem Rotorteil zueinander verfügt der in dem ersten Rotorteil eingebrachte Kanal über einen in axialer Richtung verlaufenden Abschnitt, der in einen entsprechenden Kanal des zweiten Rotorteils mündet. In dem vorbeschriebenen Ausführungsbeispiel, bei dem der Leitungsabgang des zweiten Rotorteils in einer radialen Anordnung ausgeführt ist, ist die Bohrung innerhalb des zweiten Rotorteils als Winkelbohrung ausgeführt. Die Luftübergangsstelle zwischen dem Kanal des ersten Rotorteils und demjenigen des zweiten Rotorteils ist typischerweise mit einem O-Ring abgedichtet. Aufgrund der drehmomentschlüssigen Verbindung des zweiten Rotorteils mit dem ersten Rotorteil kann diese Verbindung genutzt werden, um einen solchen O-Ring in seiner abgedichteten Stellung zwischen den beiden Kanälen der Rotorteile zu halten. Mithin werden bei einer solchen Ausgestaltung keine zusätzlichen Spann- oder anderweitige Verbindungselemente benötigt, um die abgedichtete Verbindung der ineinander übergehenden Kanäle der beiden Rotorteile herzustellen.

Gemäß einem Ausführungsbeispiel ist vorgesehen, das zweite Rotorteil mittels Verbindungsschrauben an das erste Rotorteil anzuschließen. Dabei ist vorgesehen, dass die Verbindungsschrauben mit ihrem Gewindeschaft in Gewindebuchsen des ersten Rotorteils eingreifen und sich mit ihrem Kopf an dem zweiten Rotorteil abstützen. Mithin durchgreifen die Verbindungsschrauben eine Durchbrechung des zweiten Rotorteils. Diese ist typischerweise als Bohrung ausgeführt. Zweckmäßig ist, den Durchmesser einer solchen Bohrung größer vorzusehen als den Durchmesser der Verbindungsschrauben, und zwar um das erforderliche Spannspiel. Bei dem Spannspiel handelt es sich um dasjenige Spiel, dass das als Spannring ausgeführte zweite Rotorteil aufweist, mit dem dessen Durchmesser reduziert wird, um das zweite Rotorteil drehmomentschlüssig an die Fahrzeugwelle anzuschließen bzw. an dieser zu verklemmen. Es ist dann möglich, in einem ersten Schritt bei der Montage der Drehdurchführung auf der Fahrzeugwelle nach Aufschieben derselben das zweite Rotorteil drehmomentschlüssig an die Spannwelle anzuschließen, wodurch der Spannring seinen Durchmesser reduziert. Anschließend werden die bereits vormontierten Verbindungsschrauben angezogen. Auf diese Weise ist zugleich eine Zentrierung der Rotorbaugruppe gegenüber der Fahrzeugwelle erfolgt.

Gemäß einem bevorzugten Ausführungsbeispiel befindet sich das erste Rotorteil und die Statorbaugruppe in einer radialen Anordnung zueinander, und zwar so wie dieses in dem deutschen Gebrauchsmuster 20 2010 008 453 U1 derselben Anmelderin beschrieben ist. Durch diese explizite Bezugnahme auf DE 20 2010 008 453 U1 wird deren Offenbarungsgehalt hinsichtlich der Ausbildung der Drehdurchführung zum Gegenstand auch dieser Ausführungen gemacht.

Nachfolgend ist die Erfindung anhand eines Ausführungsbeispiels unter Bezugnahme auf die beigefügten Figuren beschrieben. Es zeigen:
- **Fig. 1:**: eine Querschnittsdarstellung einer Drehdurchführung als Teil einer Reifendruckregelanlage für ein Kraftfahrzeug und
- **Fig. 2:**: eine Draufsicht auf ein Teil der Drehdurchführung der Figur 1.

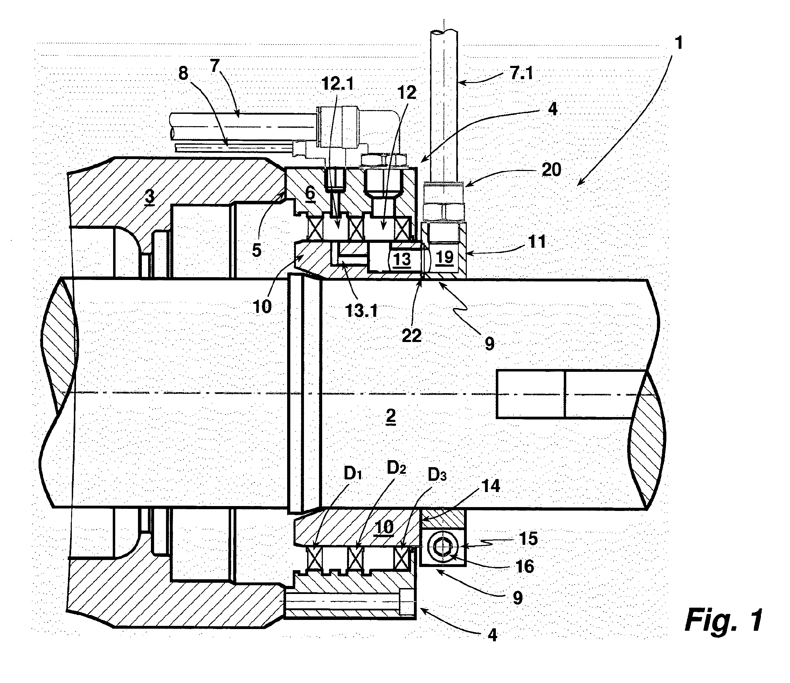

Eine Drehdurchführung 1 ist Teil einer Reifendruckregelanlage eines Kraftfahrzeuges. Die in Figur 1 dargestellte Drehdurchführung 1 ist auf eine Antriebswelle 2 des Fahrzeuges aufgesetzt und drehmomentschlüssig mit dieser verbunden. Die Antriebswelle 2 ist fahrzeugseitig durch ein Achsgehäuse 3 eingefasst. Der freie Abschnitt der Antriebswelle 2 dient zum Befestigen eines oder auch mehrerer Räder auf der Antriebswelle 2, damit diese durch die Antriebswelle 2 angetrieben werden können.

Die Drehdurchführung 1 umfasst eine Statorbaugruppe 4, die bei dem dargestellten Ausführungsbeispiel an den äußeren Abschluss 5 des Achsgehäuses 3 grenzt. Die Statorbaugruppe 4 umfasst einen Ringkörper 6 sowie daran angebrachte Anschlüsse, an die die fahrzeugseitigen Leitungen angeschlossen sind. Angeschlossen an die Statorbaugruppe 4 sind eine an eine Druckluftversorgung angeschlossene Arbeitsleitung 7 sowie eine Steuerleitung 8. Neben der Statorbaugruppe 4 umfasst die Drehdurchführung 1 eine Rotorbaugruppe 9. Die Rotorbaugruppe 9 ist bei dem dargestellten Ausführungsbeispiel aus zwei Bauteilen zusammengesetzt, namentlich einem ersten Rotorteil 10 und einem zweiten Rotorteil 11. Das erste Rotorteil 10 der Rotorbaugruppe 9 ist konzentrisch zu und radial innen liegend bezüglich der Statorbaugruppe 4 angeordnet. Zwischen der Statorbaugruppe 4 und dem ersten Rotorteil 10 der Rotorbaugruppe 9 befindet sich ein Bewegungsspalt, der durch drei in einer axialen Anordnung zueinander befindliche Dichtungen D₁, D₂, D₃ in zwei Übertragungskanäle 12, 12.1 unterteilt ist. Der Übertragungskanal 12 ist der Arbeitsleitung 7 und der Übertragungskanal 12.1 der Steuerleitung 8 zugeordnet und steht über den Ringkörper 6 durchgreifende Bohrungen mit der Arbeitsleitung 7 bzw. der Steuerleitung 8 in Verbindung. Das erste Rotorteil 10 verfügt ebenfalls jeweils über einen mit einem Übertragungskanal 12 bzw. 12.1 in Verbindung stehenden Kanal 13, 13.1, die beide als Winkelkanäle ausgeführt sind und mit ihrem anderen Ende an der in axialer Richtung weisenden Stirnfläche 14 des ersten Rotorteils 10 münden.

Die Statorbaugruppe 4 und das erste Rotorteil 10 der Rotorbaugruppe 9 ist bei dem dargestellten Ausführungsbeispiel wie die aus DE 20 2010 008 453 U1 ausgeführt, so dass die diesbezüglichen Ausführungen gleichermaßen für die diesbezüglichen Elementen bzw. Baugruppen der Drehdurchführung 1 des beschriebenen Ausführungsbeispiels gelten.

Das zweite Rotorteil 11 der Rotorbaugruppe 9 ist nach Art eines Spannringes konzipiert. Eine Spannschraube 15, die mit der Unterseite ihres Kopfes 16 an einer Anschlagfläche 17 als Teil einer in radialer Richtung in das zweite Rotorteil 11 eingebrachten Aussparung 18 anliegt, dient als Spannmittel. Fluchtend mit den Mündungen der Kanäle 13, 13.1 des ersten Rotorteils 10 sind in das zweite Rotorteil 11 als Winkelbohrungen ausgeführte Kanäle 19 eingebracht. Mit ihrem anderen Ende münden diese an der radialen Außenseite des zweiten Rotorteils 11. An dieser Stelle befindet sich eine Anschlussverschraubung 20, an die die radseitige Arbeitsleitung 7.1 angeschlossen ist. Diese steht in nicht näher dargestellter Art und Weise mit dem Reifeninneren in Fluidverbindung.

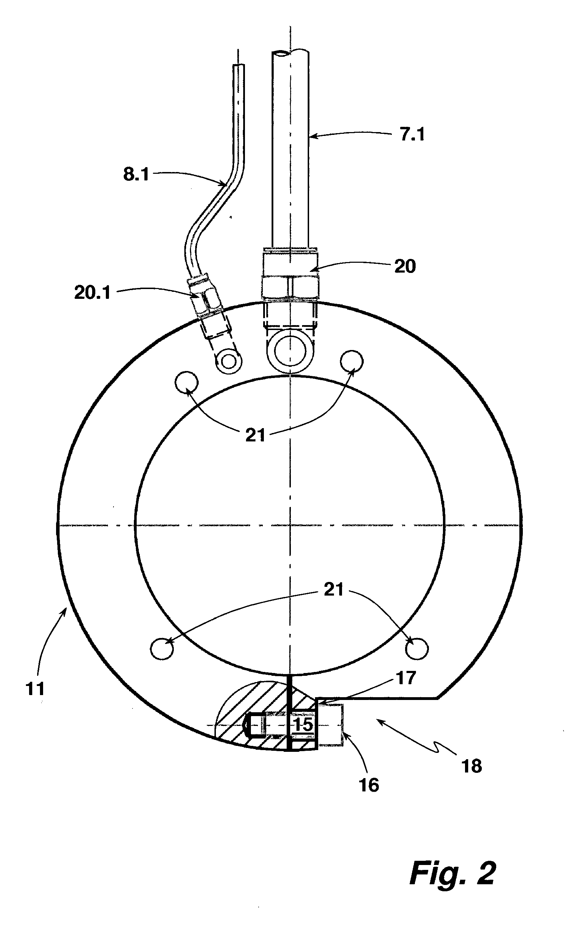

Die Draufsicht auf das zweite Rotorteil 11 der Figur 2 zeigt, dass neben dem Kanal 19 ein weiterer Kanal für die Steuerleitung mit einer entsprechenden Anschlussverschraubung 20.1 vorgesehen ist. Die Anschlussverschraubung 20.1 und die daran angeschlossene radseitige Steuerleitung 8.1 sind in Figur 1 durch die Anschlussverschraubung 20 und die daran angeschlossene Arbeitsleitung 7.1 verdeckt.

Zum drehmomentschlüssigen Anschließen des zweiten Rotorteils 11 an das erste Rotorteil 10 dienen in den Figuren nicht näher dargestellte Verbindungsschrauben. Diese werden eingesetzt in das zweite Rotorteil 11 parallel zur Längsachse desselben durchgreifende Bohrungen 21. Die Verbindungsschrauben greifen mit ihrem Schraubgewinde in komplementäre Gewindebuchsen des ersten Rotorteils 10 ein und sind darin festgesetzt. Typischerweise sind die Bohrungen 21 gestuft ausgebildet, damit der Kopf der Verbindungsschraube in dem zweiten Rotorteil 11 aufgenommen ist. Erkennbar ist in Figur 2 durch die Teilschnittdarstellung zudem die Ausrichtung der Spannschraube 15 in ihrer das zweite Rotorteil 11 an der Antriebswelle 2 verklemmenden und damit drehmomentschlüssig anschließenden Stellung.

Der Durchmesser der Bohrungen 21 ist bei dem dargestellten Ausführungsbeispiel um das erforderliche Spannspiel größer als zum Durchführen des Schraubenschaftes erforderlich. Dieses erfolgt vor dem Hintergrund, dass die Drehdurchführung 1 mit der vormontierten Rotorbaugruppe 9 auf die Antriebswelle 2 aufgeschoben wird, bis diese ihre bestimmungsgemäße Position, wie beispielsweise in Figur 1 dargestellt, erreicht hat. Bei dieser Vormontage sind die Verbindungsschrauben zum Anschließen des zweiten Rotorteils 11 an das erste Rotorteil 10 noch nicht angezogen, gleichwohl greifen diese bereits in die Gewindebuchsen des ersten Rotorteils 10 ein. Aufgrund des vorhandenen Spiels in dem Durchmesser der Bohrung 21 kann nunmehr das zweite Rotorteil 11 an der Antriebswelle 2 verspannt werden. Anschließend werden die Verbindungsschrauben angezogen, damit das zweite Rotorteil 11 fest mit dem ersten Rotorteil 10 verbunden ist. Dabei ist vorgesehen, dass in die Luftübergangsstellen zwischen den Kanälen des ersten Rotorteils 10 und des zweiten Rotorteils 11 Dichtringe - bei dem dargestellten Ausführungsbeispiel O-Ringe - eingesetzt sind, um diese Luftübergangsstellen abzudichten. In Figur 1 ist der den Kanal 13 des ersten Rotorteils 10 mit dem Kanal 19 des zweiten Rotorteils 11 abdichtende O-Ring mit dem Bezugszeichen 22 gekennzeichnet. Somit wird mit dem Anziehen der Verbindungsschrauben zum Festsetzen des zweiten Rotorteils 11 an das erste Rotorteil 10 ebenfalls der O-Ring 22 und dementsprechend der die Kanäle der Steuerleitung der beiden Rotorteile 10, 11 abdichtende O-Ring verspannt.

Infolge der vorbeschriebenen abgedichteten Verbindungen zwischen den Kanälen des ersten Rotorteils 10 und denjenigen des zweiten Rotorteils 11 sind für diese abgedichtete Verbindung keine weiteren Elemente notwendig, insbesondere keine Schraubverbindungen. Daher kann die Drehdurchführung 1 verglichen mit vorbekannten Drehdurchführungen mit einer kürzeren axialen Erstreckung ausgelegt werden. Zudem wird deutlich, dass durch das als Spannring ausgebildete zweite Rotorteil 11 die radiale Anschlussverschraubung 20, 20.1 und die jeweils daran angeschlossene Leitung 7.1, 8.1 vor Beschädigungen infolge einer unsachgemäßen Handhabung des Rades bei einer Radmontage wirksam geschützt sind.

Das beschriebene Ausführungsbeispiel betrifft eine zweikanalige Drehdurchführung, umfassend einen Arbeitskanal und einen Steuerkanal. Gleichermaßen lässt sich diese auch einkanalig realisieren oder auch mit mehr als zwei Kanälen.

Durchaus möglich ist es, einen oder mehrere der Kanäle, insbesondere den Arbeitskanal im Bereich der Drehdurchführung in mehrere einzelne Kanäle aufzuteilen, vor allem um Anpassungen an vorgegebene Einbausituationen vornehmen zu können und dennoch die durchströmbare Querschnittsfläche des Kanals möglichst groß zu belassen.

Die Beschreibung der Erfindung macht deutlich, dass sich die beschriebene Drehdurchführung bzw. die derartige Drehdurchführungen umfassende Reifendruckregelanlage vor allem auch für eine Nachrüstung eignet.

### Bezugszeichenliste

- 1: Drehdurchführung
- 2: Antriebswelle
- 3: Achsgehäuse
- 4: Statorbaugruppe
- 5: Abschluss
- 6: Ringkörper
- 7, 7.1: Arbeitsleitung
- 8, 8.1: Steuerleitung
- 9: Rotorbaugruppe
- 10: erstes Rotorteil
- 11: zweites Rotorteil
- 12, 12.1: Übertragungskanal
- 13, 13.1: Kanal
- 14: Stirnfläche
- 15: Spannschraube
- 16: Kopf
- 17: Anschlagfläche
- 18: Aussparung
- 19: Kanal
- 20, 20.1: Anschlussverschraubung
- 21: Bohrung
- 22: O-Ring

- D₁, D₂, D₃: Dichtung

## Patentansprüche

1. Drehdurchführung als Teil einer Reifendruckregelanlage eines Fahrzeuges, umfassend eine drehmomentschlüssig an eine ein Rad tragende Welle (2) des Fahrzeuges anschließbare Rotorbaugruppe (9) und eine gegenüber der Rotationsbewegung der Rotorbaugruppe (9) ortsfest angeordnete Statorbaugruppe (4), wobei sich zwischen der Rotorbaugruppe (9) und der Statorbaugruppe (4) ein abgedichteter oder abdichtbarer ringförmiger Übertragungskanal (12, 12.1) befindet, durch den für die Zwecke einer Reifendruckregelung eine Wegsamkeit zum Übertragen eines Gases von der Statorbaugruppe (4) an die Rotorbaugruppe (9) und/oder umgekehrt bereitgestellt ist, **dadurch gekennzeichnet, dass** die Rotorbaugruppe (9) mehrteilig ausgeführt ist, wobei ein erstes Rotorteil (10) ein geschlossener, auf die Welle (2) des Fahrzeuges aufschiebbarer Ringkörper (6) und ein zweites, axial zu dem ersten Rotorteil (10) angeordnetes und mit diesem drehmomentschlüssig verbundenes Rotorteil (11) als Spannring zum drehmomentschlüssigen Anschließen der Rotorbaugruppe (9) an die Fahrzeugwelle (2) ausgeführt ist, wobei das erste Rotorteil (10) einen mit seinem ersten Ende in den Übertragungskanal (12, 12.1) mündenden Kanal (13, 13.1) aufweist, der mit seinem zweiten Ende in axialer Richtung an einen Kanal des zweiten Rotorteils (11) angeschlossen ist, der in einem dem zweiten Rotorteil (11) zugeordneten Anschlussstück (20, 20.1) zum Anschließen einer zum Rad führenden Leitung (7.1, 8.1) mündet.

2. Drehdurchführung nach Anspruch 1, **dadurch gekennzeichnet, dass** das Anschlussstück (20, 20.1) des zweiten Rotorteils (11) einen radialen Abgang für eine daran anzuschließende Leitung gegenüber diesem Rotorteil (11) darstellt

3. Drehdurchführung nach Anspruch 1 oder 2, **dadurch gekennzeichnet, dass** die Luftübertragungsstelle zwischen dem Kanal (13, 13.1) des ersten Rotorteils (10) und demjenigen des zweiten Rotorteils (11) unter Zwischenschaltung eines Dichtringes (22) abgedichtet ist.

4. Drehdurchführung nach einem der Ansprüche 1 bis 3, **dadurch gekennzeichnet, dass** dem zweiten Rotorteil (11) eine den Spannschlitz des zweiten Rotorteils (11) durchgreifende Spannschraube (15) zugeordnet ist, deren Kopf (16) in einer in radialer Richtung in das zweite Rotorteil (11) eingebrachten Aussparung (18) angeordnet ist, durch welche Aussparung (18) die Anlagefläche (17) für den Kopf (16) der Spannschraube (15) bereitgestellt ist, gegen die dessen Unterseite wirkt.

5. Drehdurchführung nach einem der Ansprüche 1 bis 4, **dadurch gekennzeichnet, dass** das zweite Rotorteil (11) mit dem ersten Rotorteil (10) durch mehrere, mit ihrer Längsachse parallel zur Drehachse der Rotorbaugruppe (9) angeordnete Verbindungsschrauben miteinander verbunden sind, die das zweite Rotorteil (11) durchgreifen und die mit ihren Schraubenschaft in komplementäre Gewindebuchsen des ersten Rotorteils (10) eingreifen.

6. Drehdurchführung nach Anspruch 5, **dadurch gekennzeichnet, dass** die Verbindungsschrauben Bohrungen des zweiten Rotorteils (11) durchgreifen, deren Durchmesser zumindest um das zum Festsetzen des als Spannring ausgebildeten zweiten Rotorteils (11) an der Fahrzeugwelle (2) erforderliche Spannspiel größer ist als der Durchmesser der Verbindungsschrauben.

7. Drehdurchführung nach einem der Ansprüche 1 bis 6, **dadurch gekennzeichnet, dass** der Übertragungskanal (12, 12.1) in einer radialen Anordnung zwischen dem ersten Rotorteil (10) der Rotorbaugruppe (9) und der Statorbaugruppe (4) angeordnet ist, wobei die Statorbaugruppe (4) die außen liegende Baugruppe der Drehdurchführung (1) ist.

8. Drehdurchführung nach einem der Ansprüche 1 bis 7, **dadurch gekennzeichnet, dass** die Drehdurchführung (1) mehrkanalig ausgeführt ist, wobei diese eine der Kanalanzahl entsprechende Anzahl an Übertragungskanälen (12, 12.1) und die beiden Rotorteile (10, 11) jeweils zumindest einen jedem Rotorteil zu jedem Übertragungskanal (12, 12.1) zugeordneten Kanal (13, 13.1) aufweisen.

9. Drehdurchführung nach Anspruch 8, **dadurch gekennzeichnet, dass** zumindest ein Kanal (13, 13.1) der mehrkanaligen Drehdurchführung (1) ein Arbeitskanal und zumindest ein weiterer Kanal (13, 13.1) ein Steuerkanal ist.

## Claims

1. Rotary feed-through as part of a tyre pressure regulating system of a motor vehicle, comprising a rotor module (9) which can be connected by torque-tightening to a shaft (2) of the vehicle, supporting a wheel, and a stator module (4) arranged in a fixed position so as to act against the rotation movement of the rotor module (9), wherein a sealed or sealable ring-shaped transfer channel (12, 12.1) is located between the rotor module (9) and the stator module (4), through which, for the purposes of a tyre pressure regulation, a route is provided for the transfer of a gas from the stator module (4) to the rotor module (9) and/or vice-versa, **characterised in that** the rotor module (9) is configured as multipart, wherein a first rotor part (10) is a closed ring body (6) which can be pushed onto the shaft (2) of the vehicle, and a second rotor part (11), arranged axially to the first rotor part (10) and connected to this by torque-tightening, configured as a tension ring for the torque-tightened connection of the rotor module (9) to the vehicle shaft (2), wherein the first rotor part (10) comprises a channel (13, 13.1) which opens with its first end into the transfer channel (12, 12.1), which is connected by its second end in the axial direction to a channel of the second rotor part (11), which opens in a connection piece (20, 20.1) allocated to the second rotor part (110) for the connection of a line (7.1, 8.1) leading to the wheel.

2. Rotary feed-through according to claim 1, **characterised in that** the connection piece (20, 20.1) of the second rotor part (11) represents a radial outlet for a line connected to this, opposite this rotor part (11).

3. Rotary feed-through according to claim 1 or 2, **characterised in that** the air transfer point between the channel (13, 13.1) of the first rotor part (10) and that of the second rotor part (11) is sealed by the intermediate engagement of a sealing ring (22).

4. Rotary feed-through according to any one of claims 1 to 3, **characterised in that** a tensioning screw (15) is allocated to the second rotor part (11), which engages through a tensioning slot of the second rotor part (11) and the head (16) of which is arranged in a cut-out aperture (18) introduced in the radial direction into the second rotor part (11), by which aperture (18) the contact surface (17) is provided for the head (16) of the tensioning screw (15), against which its underside takes effect.

5. Rotary feed-through according to any one of claims 1 to 4, **characterised in that** the second rotor part (11) is connected to the first rotor part (10) by a plurality of connection screws arranged with their longitudinal axis parallel to the axis of rotation of the rotor module (9), which engage through the second rotor part (11) and which engage with their screw shafts in complementary thread inserts of the first rotor part (10).

6. Rotary feed-through according to claim 5, **characterised in that** the connection screws engage through holes of the second rotor part (11), the diameter of which is greater than the diameter of the connection screws by at least the tension play required for the securing of the second rotor part (11), configured as a tension ring, to the vehicle shaft (2).

7. Rotary feed-through according to any one of claims 1 to 6, **characterised in that** the transfer channel (12, 12.1) is arranged in a radial arrangement between the first rotor part (10) of the rotor module (9) and the stator module (4), wherein the stator module (4) is the outside module of the rotary feed-through (1).

8. Rotary feed-through according to any one of claims 1 to 7, **characterised in that** the rotary feed-through (1) is configured as multi-channel, wherein it comprises a number of transfer channels (12, 12.1) corresponding to the number of channels, and the two rotor parts (10, 11) in each case comprise at least one channel (13, 13.1) allocated to each rotor part for each transfer channel (12, 12.1).

9. Rotary feed-through according to claim 8, **characterised in that** at least one channel (13, 13.1) of the multi-channel rotary feed-through (1) is a working channel and at least one further channel (13, 13.1) is a control channel

## Revendications

1. Passage tournant faisant partie d'une installation de régulation de la pression des pneus d'un véhicule, comprenant un groupe rotor (9) qui peut être couplé de manière solidaire en rotation à un arbre (2) de véhicule supportant une roue et un groupe stator (4) disposé de manière fixe par rapport au mouvement de rotation du groupe rotor (9), un canal de transfert (12, 12.1) de forme annulaire étanche ou pouvant être étanche se trouvant entre le groupe rotor (9) et le groupe stator (4), à travers lequel est mis à disposition, à des fins de régulation de la pression des pneus, une voie de transfert d'un gaz depuis le groupe stator (4) vers le groupe rotor (9) et/ou vice versa, **caractérisé en ce que** le groupe rotor (9) est réalisé en plusieurs parties, une première partie (10) du rotor étant un corps annulaire (6) fermé pouvant être glissé sur l'arbre (2) du véhicule, et une seconde partie (11) du rotor, disposée axialement par rapport à la première partie (10) du rotor et raccordée à cette dernière de manière solidaire en rotation, étant réalisée en bague de serrage afin de raccorder de manière solidaire en rotation le groupe rotor (9) à l'arbre (2) du véhicule, la première partie du rotor (10) présentant un canal (13, 13.1), lequel débouche par sa première extrémité dans le canal de transfert (12, 12.1), et est raccordé par sa seconde extrémité dans le sens axial à un canal de la seconde partie du rotor (11), laquelle débouche dans une pièce de raccordement (20, 20.1) affectée à la seconde partie du rotor (11) afin de permettre le raccordement d'une conduite (7,1, 8.1) menant à la roue.

2. Passage tournant selon la revendication 1, **caractérisé en ce que** la pièce de raccordement (20, 20.1) de la seconde partie du rotor (11) constitue une sortie radiale pour une conduite qui y sera raccordée par rapport à cette partie du rotor (11).

3. Passage tournant selon la revendication 1 ou 2, **caractérisé en ce que** la zone de transfert d'air entre le canal (13, 13.1) de la première partie du rotor (10) et celui de la seconde partie du rotor (11) est étanchée par l'intermédiaire d'une bague d'étanchéité (22).

4. Passage tournant selon l'une des revendications 1 à 3, **caractérisé en ce qu'**une vis d'assemblage (15), traversant une fente de serrage de la seconde partie du rotor (11), est affectée à la seconde partie du rotor (11), dont la tête (16) se loge dans un évidement (18) aménagé dans le sens radial dans la seconde partie du rotor (11), à travers lequel évidement (18) est mise à disposition la surface de contact (17) pour la tête (16) de la vis d'assemblage (15), contre laquelle agit la face inférieure de celle-là.

5. Passage tournant selon l'une des revendications 1 à 4, **caractérisé en ce que** la seconde partie du rotor (11) est raccordée à la première partie du rotor (10) à travers plusieurs vis d'assemblage disposées avec leur axe longitudinal parallèlement à l'axe de rotation du groupe rotor (9), qui traversent la seconde partie du rotor (11) et qui s'engagent avec leurs tiges de vis dans les douilles filetées complémentaires de la première partie du rotor (10).

6. Passage tournant selon la revendication 5, **caractérisé en ce que** les vis d'assemblage traversent des perçages dans la seconde partie du rotor (11) dont le diamètre excède d'au moins un jeu de serrage, lequel est indispensable pour fixer la seconde partie du rotor (11) conformé en bague de serrage sur l'arbre (2) du véhicule, le diamètre des vis de raccordement.

7. Passage tournant selon l'une des revendications 1 à 6, **caractérisé en ce que** le canal de transfert (12, 12.1) est disposé radialement entre la première partie du rotor (10) du groupe rotor (9) et du groupe stator (4), le groupe stator (4) étant le groupe du passage tournant (1) disposé à l'extérieur.

8. Passage tournant selon l'une des revendications 1 à 7, **caractérisé en ce que** le passage tournant (1) est réalisé en canaux multiples, celui-ci présentant un nombre de canaux de transfert (12, 12.1) correspondant au nombre de canaux et les deux parties de rotor (10, 11) présentant respectivement au moins un canal (13,13.1) affecté à chaque partie du rotor vers chaque canal de transfert (12, 12.1).

9. Passage tournant selon la revendication 8, **caractérisé en ce qu'**au moins un canal (13, 13.1) du passage tournant (1) à canaux multiples est un canal de travail et qu'au moins un autre canal (13, 13.1) est un canal pilote.
